# EUROPÄISCHE PATENTANMELDUNG

(11) **EP 1 207 075 A1**
(43) Veröffentlichungstag der Anmeldung: **22.05.2002**
(21) Anmeldenummer: 00125424.2
(22) Anmeldetag: 20.11.2000
(51) Int. Cl.: B60P 7/08

(54) **Anker zum Befestigen oder Verzurren einer Last an einer Trägerplatte**

(71) Anmelder: Sortimo Speedwave GmbH, 86441 Zusmarshausen (DE)
(72) Erfinder: Strehle, Ludwig, 89331 Burgau (DE); Dexle, Georg, 89359 Grosskötz (DE)
(74) Vertreter: Zipse + Habersack

(57) **Zusammenfassung**

Anker zum Befestigen oder Verzurren einer Last an einer Trägerplatte. In der Trägerplatte (1) ist eine Buchse (2) fixierbar, die eine Einstecköffnung (3) für einen Verzurrbolzen aufweist. Bei nicht eingestecktem Verzurrbolzen ist die Einstecköffnung (3) durch einen Verschluss-Stopfen (9) verschlossen, der durch eine Druckfeder (10) in eine obere Position belastet ist, in der er die Einstecköffnung im Wesentlichen bündig verschließt.

## Beschreibung

Die Erfindung betrifft einen Anker gemäß dem Oberbegriff des Anspruchs 1 zum Befestigen oder Verzurren einer Last an einer Trägerplatte.

Ein solcher Anker zum Befestigen oder Verzurren einer Last an einer Trägerplatte ist in der älteren europäischen Patentanmeldung 00 112 429.6 beschrieben. Dieser Verzurranker setzt sich aus zwei Baugruppen zusammen, nämlich aus einer in der Trägerplatte fixierbaren Buchse mit einer Einstecköffnung und aus einem in diese Einstecköffnung einsteckbaren Bolzen, der einerseits zum Festhalten des Bolzens in der Einstecköffnung einen das Fußende der Buchse hintergreifenden und von vorn, d.h. von der Seite des Lastangriffs lösbaren Schnäppermechanismus aufweist und andererseits auf der Seite des Lastangriffs zum Verzurren der Last mit einem Bügel versehen ist. Nachteilig ist, dass beim Herausziehen des Bolzens die Einstecköffnung offenliegt, so dass kleinere Gegenstände durchfallen können. Auch das optische Erscheinungsbild der Trägerplatte ist durch offenliegende Einstecköffnungen gestört.

Der Erfindung liegt die Aufgabe zugrunde, einen Verzurranker dahingehend zu verbessern, dass die geschilderten Nachteile behoben sind und zudem das Herausziehen des Bolzens bei Nichtgebrauch erleichtert ist.

Diese Aufgabe wird erfindungsgemäß mit einem Verzurranker gelöst, wie er durch den Anspruch 1 gekennzeichnet ist. Weiterbildungen der Erfindung sind in den Unteransprüchen beschrieben.

Nach der Erfindung ist in der Einstecköffnung der in der Trägerplatte fixierbaren Buchse ein Verschluss-Stopfen aufgenommen, der durch eine Druckfeder in eine erste Position belastet ist, in der er die Einstecköffnung im Wesentlichen bündig verschließt. Beim Einstecken des Bolzens wird dieser Verschluss-Stopfen gegen die Kraft der Druckfeder in eine zweite Position zurückgedrängt.

Der Verschluss-Stopfen dient nicht nur dem Verschließen der Einstecköffnung der Buchse bei Nichtgebrauch, sondern er erleichtert auch das Herausziehen des Bolzens aus der Einstecköffnung, da er, belastet durch die Druckfeder, das Herausziehen des Bolzens aus der Einstecköffnung unterstützt.

Die Druckfeder ist aus Platzgründen zweckmäßig als eine sich in Richtung Verschluss-Stopfen konisch verjüngende Schraubenfeder ausgebildet. Das Fußende der Druckfeder ist zwischen dem Fußende der Verschlussbuchse und dem Boden einer Verschlussmutter eingespannt, die auf den unterhalb die Trägerplatte vorstehenden Außenmantel der Verschlussbuchse aufschraubbar ist.

Die Erfindung wird nachfolgend anhand beigefügter Zeichnung näher erläutert, welche die Verzurrankerbuchse, eingesetzt in eine Trägerplatte, in perspektivischer Darstellung und teilweise aufgeschnitten zeigt.

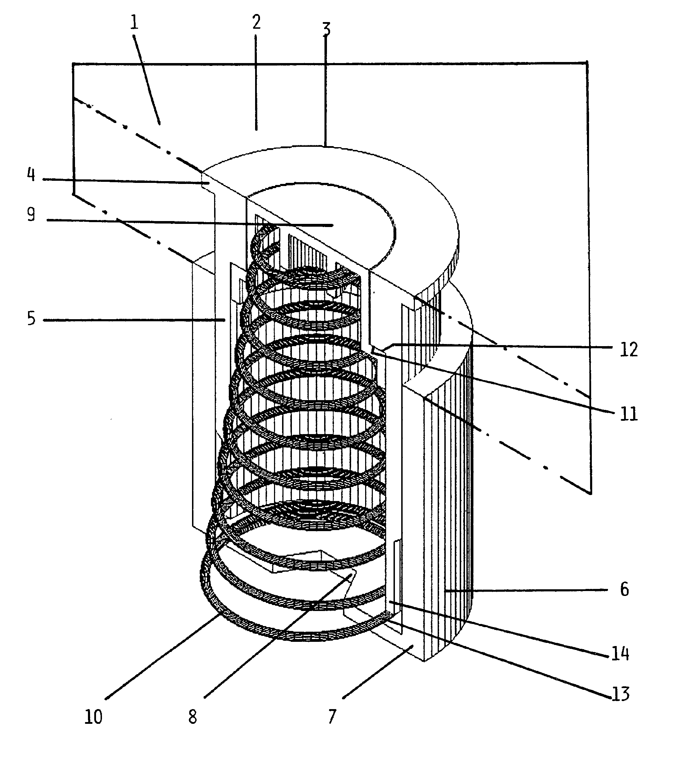

In der Zeichnung ist nur die in die Trägerplatte 1 eingesetzte Verzurranker- bzw. Verschlussbuchse 2 gezeigt, nicht jedoch der in die Einstecköffnung 3 der Verschlussbuchse 2 einzusetzende Verzurrankerbolzen mit seinem Lastangriffsbügel und seinem Schnäppermechanismus zum Hintergreifen einer Kante an der Verschlussbuchse. Bezüglich des Aufbaus dieses nicht dargestellten Verzurrankerbolzens wird auf die genannte europäische Patentanmeldung 00 112 429.6 verwiesen.

Die Verschlussbuchse 2 sitzt mit einem oberen Ringbund 4 bündig in einer Aufnahmeöffnung der Trägerplatte 1. Der zylindrische Hohlschaft 5 der Verschlussbuchse 2 ragt aus der Unterseite der Trägerplatte 1 vor und auf den vorragenden Teil des Außenmantels dieses Hohlschaftes 5 ist eine Verschlussmutter 6 aufgeschraubt, welche die Verschlussbuchse 2 an der Trägerplatte 1 festspannt. Die Verschlussmutter 6 besitzt einen Boden 7 mit einem Innensechskant 8, mittels dem die Verschlussmutter 6 aufgeschraubt und gelöst werden kann.

In der Einstecköffnung 3 der Verschlussbuchse 2 ist ein Verschluss-Stopfen 9 aufgenommen, der durch eine Druckfeder 10 in eine erste obere Position belastet ist, in der er die Einstecköffnung 3 im Wesentlichen bündig verschließt. Im Hohlschaft 5 der Verschlussbuchse 2 ist eine Ringschulter 11 ausgebildet, die mit einer komplementären Ringschulter 12 am Verschluss-Stopfen 9 zusammenwirkt, wenn dieser durch die Druckfeder 10 in die obere Position bewegt ist. Beim Einstecken des (nicht dargestellten) Verzurrbolzens in die Einstecköffnung 3 wird der Verschluss-Stopfen 9 gegen die Kraft der Druckfeder 10 in eine zweite untere Position zurückgedrängt. Dabei hintergreift der Verzurrbolzen mit seinem Schnäppermechanismus die Ringschulter 11 am Hohlschaft 5, wodurch er in der Verschlussbuchse 2 festgehalten ist. Der Schnäppermechanismus am Verzurrbolzen ist von außen, d.h. von der Seite des Lastangriffs lösbar, woraufhin der Verzurrbolzen, unterstützt durch die Kraft der Druckfeder 10, aus der Einstecköffnung 3 herausgezogen werden kann.

Die Druckfeder 10 ist, wie dargestellt, als eine sich in Richtung Verschluss-Stopfen 9 konisch verjüngende Schraubenfeder ausgebildet. Das Fußende 13 der Druckfeder 10 ist dabei zwischen dem Fußende 14 der Verschlussbuchse 2 bzw. von dessen Hohlschaft 5 und dem Boden 7 der Verschlussmutter 6 eingespannt.

Die Verschlussbuchse 2 mit Verschlussmutter 6 und Verschluss-Stopfen 9 sind gewöhnlich Spritzgussteile aus einem hochfesten Kunststoff. Der in die Einstecköffnung 3 einzusetzende Verzurrbolzen ist zweckmäßig ein Stahl- oder Aluminiumteil.

## Patentansprüche

1. Anker zum Befestigen oder Verzurren einer Last an einer Trägerplatte (1) mit einer in der Trägerplatte fixierbaren Buchse (2) mit einer Einstecköffnung (3) und mit einem in die Einstecköffnung (3) einsteckbaren Bolzen mit Mitteln zur Sicherung des Bolzens in der Öffnung und mit Mitteln zum Angriff der Last,
**gekennzeichnet durch** einen in der Einstecköffnung (3) aufgenommenen Verschluss-Stopfen (9), der **durch** eine Druckfeder (10) in eine erste Position belastet ist, in der er die Einstecköffnung (3) im Wesentlichen bündig verschließt, und bei Einstecken des Bolzens gegen die Kraft der Druckfeder (10) in eine zweite Position zurückdrängbar ist.

2. Anker nach Anspruch 1,
**dadurch gekennzeichnet, dass** die Druckfeder (10) als eine sich in Richtung Verschluss-Stopfen (9) konisch verjüngende Schraubenfeder ausgebildet ist.

3. Anker nach Anspruch 2,
**dadurch gekennzeichnet, dass** das Fußende (13) der Druckfeder(10) zwischen dem Fußende (14) der Verschlussbuchse (2) und dem Boden (7) einer Verschlussmutter (6) eingespannt ist, die auf den unterhalb die Trägerplatte (1) vorstehenden Außenmantel der Verschlussbuchse (2) aufschraubbar ist.

4. Anker nach Anspruch 3,
**dadurch gekennzeichnet, dass** im Boden (7) der Verschlussmutter (6) eine Innensechskantöffnung (8) ausgebildet ist.

5. Anker nach einem der Ansprüche 1 bis 4,
**dadurch gekennzeichnet, dass** in der Einstecköffnung (3) eine Ringschulter (11) ausgebildet ist, die einerseits in der ersten Position des Verschluss-Stopfens (9) mit einer komplementären Ringschulter (12) am Verschluss-Stopfen (9) und andererseits bei eingestecktem Bolzen mit den Mitteln zur Sicherung des Bolzens in der Einstecköffnung (3) zusammenwirkt.
